# NEUE EUROPÄISCHE PATENTSCHRIFT

(11) **EP 1 514 037 B2**
(45) Veröffentlichungstag und Bekanntmachung des Hinweises auf die Entscheidung über den Einspruch: **05.08.2015**
(45) Hinweis auf die Patenterteilung: 29.03.2006
(21) Anmeldenummer: 03729993.0
(22) Anmeldetag: 09.05.2003
(51) Int. Cl.: F16D 21/06

(54) **DOPPELKUPPLUNGSANORDNUNG**
DUAL CLUTCH SYSTEM
SYSTEME D'EMBRAYAGE DOUBLE

(30) Priorität: 19.06.2002 DE 10227283
(43) Veröffentlichungstag der Anmeldung: 16.03.2005
(73) Patentinhaber: ZF Friedrichshafen AG, 88038 Friedrichshafen (DE)
(72) Erfinder: ORLAMÜNDER, Andreas, 97422 Schweinfurt (DE); VOGT, Sebastian, 97616 Bad Neustadt (DE)
(74) Vertreter: 2SPL Patentanwälte PartG mbB
(86) Internationale Anmeldenummer: PCT/EP2003/004850
(87) Internationale Veröffentlichungsnummer: WO 2004/001251

(56) Entgegenhaltungen:
- EP-A- 0 931 951
- EP-A1- 0 931 951
- DE-A- 19 941 837
- DE-A1- 10 018 646
- DE-A1- 10 064 459
- DE-C2- 3 446 460
- FR-A- 2 810 708

## Beschreibung

### Technisches Gebiet

Die vorliegende Erfindung betrifft eine Doppelkupplungsanordnung, umfassend eine Gehäuseanordnung und eine mit dieser fest verbundene Widerlageranordnung, eine erste Anpressplatte, durch welche eine erste Kupplungsscheibe gegen die Widerlageranordnung pressbar ist, eine zweite Anpressplatte, durch weiche eine zweite Kupplungsscheibe gegen die Wideriageranordnung pressbar ist, ein erstes Einrückbeaufschlagungsorgan, das zur Einleitung einer Einrückkraft in die erste Anpressplatte an der Gehäuseanordnung abstützbar ist, sowie ein zweites Einrückbeaufschlagungsorgan, das zur Einleitung einer Einrückkraft in die zweite Anpressplatte an der Gehäuseanordnung abstützbar ist.

### Stand der Technik

Beim Aufbau von Doppelkupplungsanordnungen besteht insbesondere auch aus Kostengründen zunehmend die Tendenz, Bauteile zu vereinfachen bzw. dafür zu sorgen, dass die vorzusehenden Bauteile möglichst einfach aufgebaut sind bzw. möglichst einfach zusammenzufügen sind. Bei bekannten Doppelkupplungsanordnungen stützen sich die häufig auch als Einrückbeaufschlagungsorgane eingesetzten Kraftspeicher im Allgemeinen zumindest teilweise über so genannte Drahtringe an Gehäusebauteilen ab, wobei diese Drahtringe in Umfangsrichtung vorzugsweise umlaufende Anlagebereiche für die Kraftspeicher bilden.

Weiterhin ist aus der gattungsgemäßen DE-A1-199 41 837 bekannt, eine Kupplung mit zwei Reibscheiben und zwei zugehörigen Anpreßplatten, welche einzeln betätigbar sind. Hierbei umgreift das Gehäuse beide Reibscheiben sowie beide Anpreßplatten und weist an seinem einen Ende Abstütznasen auf, an welchen sich jeweils Betätigungsfedem abstützen. Die hierbei gezeigte Ausgestaltung erfordert in der Herstellung aber einen komplizierten, mehrere Einzelschritte umfassenden Ablauf, bei dem die Einhaltung der Bauteiltoleranzen sehr aufwendig sein wird. Aus der DE 100 64 459 A1 ist eine Doppelkupplungsanordnung bekannt.

### Aufgabe der Erfindung

Es ist die Aufgabe der vorliegenden Erfindung, den konstruktiven Aufbau einer Doppelkupplungsanordnung zu vereinfachen.

### Darstellung der Erfindung

Gemäß der vorliegenden Erfindung wird diese Aufgabe gelöst durch eine Doppelkupplungsanordnung, nach den Merkmalen des Anspruchs 1.

Durch das integrale Anformen der Abstützbereiche der beiden Einrückbeaufschlagungsorgane einer Doppelkupptungsanordnung kann auf das zusätzliche Vorsehen von der Abstützung dienenden Drahtringen o. dgl. verzichtet werden, was zum einen die Teilezahl verringert und zum anderen den Vorgang des Zusammensetzens vereinfacht.

Hier ist erfindungsgemäß vorgesehen, dass die Gehäuseanordnung ein durch Blechumformung gebildetes Gehäuseteil aufweist, an welchem die Abstütrabschnitte angeformt sind. Beim Umformen eines Blechrohlings kann also dann gleichzeitig vorgesehen sein, dass die jeweiligen Abstützbereiche mitangeformt werden, so dass auch hierzu keine weiteren Bearbeitungsvorgänge erforderlich sind.

Um insbesondere bei Einsatz eines Blechumformteils die radial gestaffelten und axial auch zueinander versetzt liegenden Abstützabschnitte bereitstellen zu können, wird vorgeschlagen, dass der eine Abstützabschnitt und der andere Abstützabschnitt durch radial versetzt zueinander liegende dachartige Ausformungen gebildet sind.

Um eine möglichst definierte Wirkcharakteristik der Einrückbeaufschlagungsorgane erlangen zu können, ist erfindungsgemäß vorgesehen, dass der erste Abstützabschnitt und der zweite Abstützabschnitt durch schneidenartige Ausformungen eines Gehäusebauteils gebildet ist.

Vor allem bei Doppelkupplungsanordnungen ist es häufig erforderlich, über weitere Übertragungselemente zumindest für einen der Kupplungsbereiche bzw. eine der Anpressplatten eine Weiterleitung der Einrückkraft zu erlangen. Hierzu ist erfindungsgemäß vorgesehen, dass an wenigstens einem Einrückkraftubertragungsetement ein weiterer Abstützabschnitt für eines der Einrückbeaufschlagungsorgane integral ausgebildet ist. Auch dabei ist es aus fertigungstechnischen Gründen wieder erfindungsgemäß wenn das Einrückkraftübertragungselement durch Umformung eines Blechrohlings gebildet ist.

In einer besonders bevorzugten Ausgestattungsform kann weiter vorgesehen sein, dass wenigstens eines der Einrückbeaufschlagungsorgane einen Kraftspeicher, vorzugsweise Membranfeder, umfasst. Es sei jedoch darauf hingewiesen, dass als Einrückbeaufschlagungsorgane nicht nur solche Elemente eingesetzt werden können, die aufgrund ihrer Eigenelastizität eine Einrückkraft erzeugen und diese auf die Anpressplatte unter Abstützung an der Gehäuseanordnung übertragen, sondern auch solche Organe, die im Wesentlichen nur als Übertragungshebel dienen und dabei, ohne einen wesentlichen Eigenkraftbeitrag zu liefem, die durch ein Einrückersystem bereitgestellte Einrückkraft unter Abstützung an der Gehäuseanordnung auf die jeweils zugeordnete Anpressplatte übertragen.

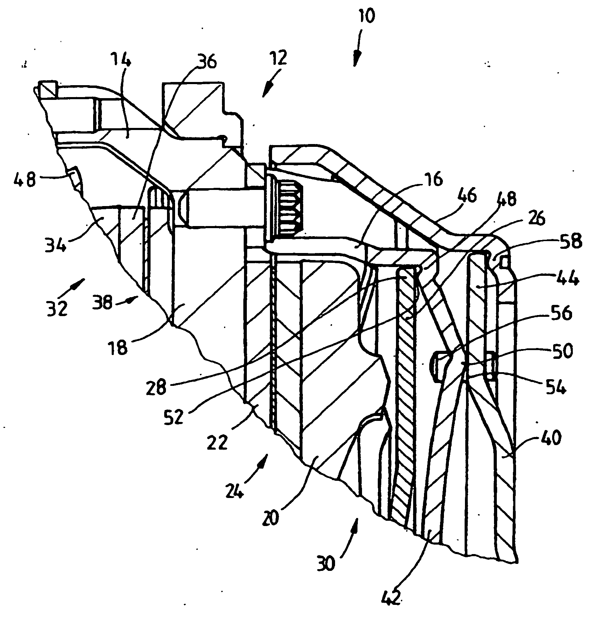

Die vorliegende Erfindung wird nachfolgend mit Bezug auf die beiliegende Figur detailliert beschrieben, welche eine Teitschnittansicht einer Doppelkupplungsanordnung bzw. einer Druckplattenbaugruppe derselben darstellt.

Die in der Figur dargestellte Doppelkupplung 10 umfasst eine allgemein mit 12 bezeichnete Gehäuseanordnung, welche im Wesentlichen wiederum zwei Teile 14, 16 umfasst. Das Gehäuseteil 14 ist zur Anbindung an eine Antriebswelle, eine Schwungmasse, beispielsweise ein herkömmliches Schwungrad oder ein Zweimassenschwungrad ausgebildet und bildet gleichzeitig eine im Folgenden hinsichtlich ihrer Funktion auch noch beschriebene Zwischenplatte 18. Das Gehäuseteil 16 ist mit dem Gehäuseteil 14 verbunden und weist ebenso wie dieses eine näherungsweise topfartige Formgebung auf. Während das Gehäuseteil 14 als Gussteil hergestellt ist, ist das Gehäuseteil 16 vorzugsweise als. Blechumformteil bereitgestellt und ist mit dem Gehäuseteil 14 durch Verschraubung fest verbunden.

Eine erste Anpressplatte 20 ist in dem Gehäuseteil 16 angeordnet und mit diesem beispielsweise über Tangentialblattfedern o. dgl. zur gemeinsamen Drehung, in Richtung einer Drehachse jedoch bewegbar gekoppelt. Zwischen der Anpressplatte 20 und der Zwischenplatte 18 liegen die Reibbeläge 22 einer ersten Kupplungsscheibe 24, die zur drehfesten Ankopplung an eine erste Abtriebswelle ausgebildet ist. Ein beispielsweise als Membranfeder ausgebildeter Kraftspeicher 26 stützt sich in seinem radial äußeren Bereich 28 am Gehäuseteil 16 ab und beaufschlagt radial weiter innen die Anpressplatte 20, so dass diese in Richtung auf die Zwischenplatte 18 zu vorgespannt ist und dabei die Reibbeläge 22 der Kupplungsscheibe 24 einklemmt. Der Kraftspeicher 26, die Anpressplatte 20, die Kupplungsscheibe 24 und die Zwischenplatte 18 bilden die wesentlichen Komponenten eines allgemein mit 30 bezeichneten ersten Kupplungsbereichs.

Ein allgemein mit 32 bezeichneter zweiter Kupplungsbereich umfasst eine weitere Anpressplatte 34, die an der anderen axialen Seite der Zwischenplatte 18 angeordnet ist und beispielsweise mit dem Gehäuseteil 14 drehfest, bezüglich diesem jedoch axial bewegbar gekoppelt ist. Zwischen dieser zweiten Anpressplatte 34 und der Zwischenplatte 18 liegen die Reibbeläge 36 einer zweiten Kupplungsscheibe 38. Ein dem zweiten Kupplungsbereich 32 zuzuordnender, beispielsweise wieder als Membranfeder ausgebildeter Kraftspeicher 40 ist an der anderen axialen Seite des Bodenbereichs 42 des Gehäuseteils 16 angeordnet und beaufschlagt in seinem radial äußeren Bereich 44 ein Einrückkraftübertragungselement 46. In seinem radial weiter innen gelegenen Bereich ist dieser zweite Kraftspeicher 40 an dem Bodenbereich 42 des Gehäuseteils 16 abgestützt. Das Einrückkraftübertragungselement 46, welches ebenfalls eine topfartige Konfiguration aufweist und beispielsweise auch als Blechumformteil bereitgestellt ist, ist über Zuganker o. dgl. mit einem weiteren nur schematisch angedeuteten Einrückkraftübertragungselement 48 gekoppelt, das beispielsweise über eine Verschleißnachstellvorrichtung die Anpressplatte 34 beaufschlagt, um somit die Einrückkraft des Kraftspeichers 40 auf die zweite Anpressplatte 34 zu übertragen. Aufgrund ihrer Zusammenwirkung mit den jeweils durch diese beaufschlagten Organen Anpressplatte 20 bzw. Einrückkraftübertragungselement 46 sind die beiden Kraftspeicher 26, 40 derart angeordnet, dass sich jeweils Kupplungsbereiche 30, 32 des gezogenen Typs ergeben.

Man erkennt, dass die eine Widerlagerfunktion übernehmende Abstützung der beiden Kraftspeicher 26, 40 am Bodenbereich 42 des Gehäuseteils 16 jeweils in an diesem Gehäuseteil 16 integral angeformten Abstützbereichen 48, 50 erfolgt. In diesen Abstützbereichen 48, 50 weist das Gehäuseteil 16 in Umfangsrichtung um die Drehachse erfindungsgemäß vollständig umlaufende Schneidenbereiche 52, 54 auf, an welchen die Kraftspeicher 26 bzw. 40 anliegen. Die beiden Abstützbereiche 48, 50 werden beim Umformungsvorgang eines für das Gehäuseteil 16 vorgesehenen Blechrohlings mitangeformt, so dass sich in Richtung auf den jeweils abzustützenden Kraftspeicher 26 oder 40 zu eine dachartige Erhebung ergibt, wobei die beiden Abstützbereiche 48, 50 bzw. deren Schneiden 52, 54 nicht nur radial versetzt zueinander liegen, sondern auch zum Ermöglichen der Ausrückbetätigung der Kraftspeicher 26, 40 im radial inneren Bereich einen axialen Versatz bereitstellen. Man erkennt ferner, dass der Kraftspeicher 40 durch mehrere in Umfangsrichtung verteilt liegende Bolzenelemente 56 an der Außenseite des Gehäuseteils 16 auch gehalten ist, insbesondere auch gegen Drehung gehalten ist.

Auch an dem Einrückkraftübertragungselement 46 ist ein integral angeformter Abstützbereich 58 vorgesehen, an welchem der Kraftspeicher 40 in seinem radial äußeren Bereich 44 abgestützt ist. Auch dieser Abstützbereich 58 kann beim Umformungsvorgang mitangeformt werden und stellt einen Schneidenbereich für den Kraftspeicher 40 bereit.

Durch das unmittelbare Abstützen der Kraftspeicher 26, 40 an den der Abstützung dienenden Elementen kann auf den Einbau von Drahtringen o. dgl. verzichtet werden, was nicht nur den Gesamtaufbau vereinfacht und somit die Kosten reduziert, sondern auch zu einer geringeren axialen Baulänge führt, was insbesondere bei den ohnehin sehr groß bauenden Doppelkupplungen von erheblichem Vorteil ist.

Es sei darauf hingewiesen, dass die erfindungsgemäße Bereitstellung von Abstützbereichen als integraler Bestandteil eines Gehäusebauteils selbstverständlich auch dann zum Einsatz kommen kann, wenn als Einrückbeaufschlagungsorgane nicht die vorangehend beschriebenen Kraftspeicher zum Einsatz kommen, sondern Hebelanordnungen, die sich an einem Gehäuseteil einerseits und einer Anpressplatte oder einem Einrückkraftübertragungselement andererseits abstützen und die dann in Hebelendbereichen durch einen Einrückermechanismus zum Bereitstellen der erforderlichen Einrückkraft beaufschlagt werden.

## Patentansprüche

1. Doppelkupplungsanordnung, umfassend eine Gehäuseanordnung (12) und eine mit dieser fest verbundene Widerlageranordnung (18), eine erste Anpressplatte (20), durch welche eine erste Kupplungsscheibe (24) gegen die Widerlageranordnung (18) pressbar ist, eine zweite Anpressplatte (34), durch welche eine zweite Kupplungsscheibe (38) gegen die Widerlageranordnung (18) pressbar ist, ein erstes Einrückbeaufschlagungsorgan (26), das zur Einleitung einer Einrückkraft in die erste Anpressplatte (20) an einem ersten Abstützabschnitt (48) der Gehäuseanordnung (12) abstützbar ist, ein zweites Einrückbeaufschlagungsorgan (40), das zur Einleitung einer Einrückkraft in die zweite Anpressplatte (34) an einem zweiten Abstützabschnitt (50) der Gehäuseanordnung (12) abstützbar ist, wobei an der Gehäuseanordnung (12) für das erste Einrückbeaufschlagungsorgan (26) der erste Abstützabschnitt (48) integral ausgebildet ist und für das zweite Einrückbeaufschlagungsorgan (40) der zweite Abstützabschnitt (50) integral ausgebildet ist, wobei an einem ringscheibenartigen Bereich (42) der Gehäuseanordnung (12) einer (48) der Abstützabschnitte (48, 50) zur Abstützung an einer ersten axialen Seite ausgebildet ist und der andere Abstützabschnitt (50) zur Abstützung an einer zweiten axialen Seite ausgebildet ist und radial versetzt zu dem einen Abstützabschnitt (48) liegt, jeweils bezogen auf eine Drehachse der Doppelkupplungsanordnung und wobei die Gehäuseanordnung (12) ein durch Blechumformung gebildetes Gehäuseteil (16) aufweist, an welchem die Abstützabschnitte (48, 50) angeformt sind, und wobei an wenigstens einem Einrückkraftübertragungselement (46) ein weiterer Abstützabschnitt (58) für eines (40) der Einrückbeaufschlagungsorgane (26, 40) integral ausgebildet ist, wobei das Einrückkraftübertragungselemente (46) durch Umformung eines Blechrohlings gebildet ist,
wobei der erste Abstützabschnitt (48) und der zweite Abstützabschnitt (50) durch radial versetzt zueinander liegende schneidenartige vollständig umlaufende Ausformungen (52, 54) eines Gehäusebauteils (16) gebildet sind.

2. Doppelkupplungsanordnung nach Anspruch 1, **dadurch gekennzeichnet, dass** wenigstens eines der Einrückbeaufschlagungsorgane (26, 40) einen Kraftspeicher, vorzugsweise Membranfeder, umfasst.

## Claims

1. Dual clutch arrangement comprising a housing arrangement (12) and an abutment arrangement (18) which is fixedly connected to the latter, a first pressing plate (20), by means of which a fist clutch disc (24) can be pressed against the thrust bearing arrangement (18), a second pressing plate (34), by means of which a second clutch disc (38) can be pressed against the thrust bearing arrangement (18), a first engagement loading member (26) which can be supported against a first support section (48) of the housing arrangement (12) in order to apply an engagement force to the first pressing plate (20), a second engagement loading member (40) which can be supported against a second support section (50) of the housing arrangement (12) in order to apply an engagement force to the second pressing plate (34), the first support section (48) being integrally formed on the housing arrangement (12) for the first engagement loading member (26) and the second support section (50) being integrally formed for the second engagement loading member (40), wherein on an annular disc-like region (42) of the housing arrangement (12), one (48) of the support sections (48, 50) is designed to be supported on a first axial side, and the other support section (50) is designed to be supported on a second axial side and is radially offset from the first support section (48), in each case relative to a rotational axis of the dual clutch arrangement, and the housing arrangement (12) has a housing part (16), formed by sheet metal shaping, on which the support sections (48, 50) are integrally formed, and wherein a further support section (58) for one (40) of the engagement loading members (26, 40) is integrally formed on at least one engagement force transmission element (46), wherein the engagement force transmission element (46) is formed by shaping a sheet metal blank, wherein the first support section (48) and the second support section (50) are formed by completely circumferential cutting-edge like formations (52, 54) of a housing component (16) which are radially offset from one another.

2. Dual clutch arrangement according to claim 1, **characterized in that** at least one of the engagement loading members (26, 40) comprises an energy storage device, preferably a diaphragm spring.

## Revendications

1. Système d'embrayage double, comprenant un ensemble de carter (12) et un ensemble de contre-appui (18) solidarisé de celui-ci, un premier plateau de pression (20) permettant de comprimer un premier disque d'embrayage (24) contre l'ensemble de contre-appui, un second plateau de pression (34) permettant de comprimer un second disque d'embrayage (38) contre l'ensemble de contre-appui (18), un premier organe de sollicitation en embrayage (26), pouvant être soutenu pour introduire une force d'embrayage dans le premier plateau de pression (20) au niveau d'une première partie de soutien (48) de l'ensemble de carter (12), un second organe de sollicitation en embrayage (40), pouvant être soutenu pour introduire une force d'embrayage dans le second plateau de pression (34) au niveau d'une seconde partie de soutien (50) de l'ensemble de carter (12), où la première partie de soutien (48) est solidaire de l'ensemble de carter (12) pour le premier organe de sollicitation en embrayage (26) et la seconde partie de soutien (50) est solidarisée pour le second organe de sollicitation en embrayage (40), où l'une (48) des parties de soutien (48, 50) est formée contre une zone en forme de disque annulaire (42) de l'ensemble de carter (12) pour apporter un soutien au niveau d'un premier côté axial et l'autre partie de soutien (50) est formée pour apporter un soutien au niveau d'un second côté axial et repose de manière décalée radialement par rapport à ladite partie de soutien (48), toujours par rapport à un axe de rotation du système d'embrayage double et où l'ensemble de carter (12) présente une partie boîtier (16) constituée par déformation de la tôle, boîtier au niveau duquel les parties de soutien (48, 50) sont conformées, et où une autre partie de soutien (58) est solidarisée contre au moins un élément de transmission de force d'embrayage (46), pour l'un (40) des organes de sollicitation en embrayage (26, 40), où élément de transmission de force d'embrayage (46) est constitué par déformation d'une ébauche de tôle,
où la première partie de soutien (48) et la seconde partie de soutien (50) sont constituées de déformations tranchantes décalées l'une par rapport à l'autre et entièrement circonférentielles (52, 54) d'un élément du boîtier (16).

2. Système d'embrayage double selon la revendication 1, **caractérisé en ce qu'**au moins l'un des organes de sollicitation en embrayage (26, 40) comprend un accumulateur d'énergie, de préférence un ressort à membrane.
